# EUROPEAN PATENT APPLICATION

(11) **EP 4 632 484 A1**
(43) Date of publication of application: **15.10.2025**
(21) Application number: 24170051.7
(22) Date of filing: 12.04.2024
(51) Int. Cl.: G03F 7/00, G06F 30/392, G03F 1/70

(54) **AN IC DEVICE AND A METHOD FOR DETERMINING A FLOORPLAN FOR AN IC DEVICE**

(71) Applicant: IMEC VZW, 3001 Leuven (BE)
(72) Inventor: MIYAGUCHI, Kenichi, 3001 Heverlee (BE); OAK, Apoorva, 1930 Zaventem (BE); KIM, Ryan Ryoung han, 3060 Bertem (BE)
(74) Representative: Lind Edlund Kenamets Intellectual Property AB

(57) **Abstract**

In an aspect there is provided an IC device comprising:
a die;
a circuit region extending along the die in first and second transverse directions and comprising a plurality of circuit cells arranged in a plurality of rows extending in parallel in the first direction;
wherein the circuit region comprises a first sub-region comprising a first sub-set of the plurality of rows of circuit cells, a second sub-region comprising a second sub-set of the plurality of rows of circuit cells, and an in-die stitching sub-region extending across the circuit region in the first direction,
wherein the first and second sub-regions are arranged on opposite sides of the in-die stitching sub-region, and
wherein the in-die stitching sub-region is formed by a third sub-set of one or more rows of the plurality of rows of circuit cells, wherein the circuit cells of the third sub-set are configured as filler cells with a critical dimension which is greater than a corresponding critical dimension of the circuit cells of the first and second sub-sets.

There is further provided a method for floorplanning of a circuit region of an IC device.

## Description

### TECHNICAL FIELD

The present invention generally relates to an integrated circuit (IC) device and a method for determining a floorplan for an IC device.

### BACKGROUND

The on-going strive for producing ever more dense and efficient IC devices has led to considerable advancements in various fields of IC fabrication. In particular, lithographic scanners with shorter wavelengths and higher numerical aperture (NA) have been developed.

Current state of the art high-NA (NA=0.55) extreme ultraviolet lithography (EUVL) scanners employ anamorphic projection optics with a demagnification of 4 times and 8 times, respectively, along the directions perpendicular to and parallel to the plane of incidence of the EUV radiation on the reticle or mask. This results in a two times smaller on-wafer image field than for a 0.33 NA EUV scanner (26 mm x 16.5 mm versus 26 mm x 33 mm). This introduces the requirement of in-die stitching of two image fields from two reticle masks when producing die sizes exceeding the 0.55 NA exposure field.

### SUMMARY

In-die stitching at EUVL resolution requires techniques of nanometer-order precision for optical proximity correction (OPC) correction of aerial image field cross-talk and overlay control of the image fields, etc., as well as stitching specific design rules.

It is an object of the present invention to provide techniques allowing the complexity of at-resolution stitching to be mitigated.

According to a first aspect of the present invention, there is provided an integrated circuit, IC, device comprising:
a die;
a circuit region extending along the die in first and second transverse directions and comprising a plurality of circuit cells arranged in a plurality of rows extending in parallel in the first direction;
wherein the circuit region comprises a first sub-region comprising a first sub-set of the plurality of rows of circuit cells, a second sub-region comprising a second sub-set of the plurality of rows of circuit cells, and an in-die stitching sub-region extending across the circuit region in the first direction,
wherein the first and second sub-regions are arranged on opposite sides of the in-die stitching sub-region, and
wherein the in-die stitching sub-region is formed by a third sub-set of one or more rows of the plurality of rows of circuit cells, wherein the circuit cells of the third sub-set are configured as filler cells with a critical dimension which is greater than a corresponding critical dimension of the circuit cells of the first and second sub-sets.

According to a second aspect of the present invention, there is provided a method for floorplanning of a circuit region of an IC device, comprising:
obtaining a floorplan for the circuit region;
determining a location of an in-die stitching boundary for the floorplan, the in-die stitching boundary extending in a first direction across the floorplan;
placing one or more rows of filler cells in an in-die stitching sub-region of the floorplan, wherein the one or more rows of filler cells extend in the first direction and the in-die stitching sub-region extends along the in-die stitching boundary, and
placing in each of a first and a second sub-region of the floorplan on opposite sides of the in-die stitching sub-region, circuit cells in a plurality of rows extending in parallel in the first direction,
wherein the filler cells have a critical dimension which is greater than a corresponding critical dimension of the circuit cells of the first and second sub-regions.

The first and second aspects of the present invention are based on the insight that the complexities of at-resolution stitching may be avoided by introducing an in-die stitching sub-region of one or more rows of filler cells along the in-die stitching boundary. As the filler cells are configured to be associated with a greater (i.e., "relaxed") critical dimension (CD) than the circuit cells of the first and sub-regions on opposite sides of the in-die stitching region and boundary, the first and second aspects enable an IC device which may be fabricated using in-die stitching, while avoiding at-resolution stitching. The requirements on precision of the control and alignment of stitching image fields during fabrication may hence be relaxed relative to at-resolution stitching.

Adding one or more rows of filler cells may facilitate in-die stitching with little or negligible loss of area efficiency.

For example, the in-die stitching sub-region may in some embodiments be formed by (or consist of) at most 10 rows of circuit cells, at most 5 rows of circuit cells, at most 2 rows of circuit cells, or only 1 row of circuit cells. Where the in-die stitching sub-region is formed by 2 or more rows, the 2 or more rows of the in-die stitching sub-region are consecutive rows of filler cells.

A further benefit of providing an in-die stitching sub-region with filler cells is that a certain minimum feature density thereby may be maintained in the in-die stitching sub-region also in the levels comprising the feature patterns of the filler cells. This may facilitate fabrication of these levels, and of the corresponding levels of the first and second sub-regions, compared to had the in-die stitching sub-region at those levels instead been empty. Notably, a metal level being empty or having a low and/or non-uniform feature density compared to the corresponding levels of the first and second sub-regions may be more challenging to planarize (e.g., chemical mechanical polishing) and also increase a risk of feature collapse.

As may be appreciated from the above discussion, the first and second aspects may be especially useful for technology nodes requiring high-NA scanners, such as 0.55 NA EUVL scanners, where at-resolution in-die stitching would be especially challenging.

Thus, the in-die stitching sub-region, and the in-die stitching boundary, may extend along a midline of the die. Further, the first and second sub-regions may have substantially uniform footprints (i.e., as seen in a major plane of the die).

Various embodiments, examples and features of the circuit region, the sub-regions, the circuit cells and filler cells will be set out in the following discussion, applying correspondingly to each of the first and second aspects, unless stated otherwise.

The term "circuit cell" is herein used in its normal sense to refer to a cell of a circuit region, typically of a rectangular shape, comprising a set of associated and/or interconnected circuit features. A circuit cell may be either "functional" or "non-functional".

The term "functional cell" is herein used to refer to a circuit cell configured to implement a circuit function. A functional cell may be a logic cell configured to implement a logic function (e.g., a logic gate or a combination of logic gates), a memory cell, or an I/O cell. A functional cell may be a standard cell, i.e., a circuit cell of a standard cell design selected from a standard cell library. A functional cell may comprise a semiconductor pattern (i.e., a pattern of active regions comprising source/drain regions and channel regions), a gate pattern and a metal layer pattern.

The term "non-functional cell" is herein used to refer to a cell not implementing any circuit function which may be implemented by a functional cell, such as a logic cell, a memory cell or an I/O cell. A non-functional cell may be a dummy cell comprising one or more of a dummy semiconductor pattern, a dummy gate pattern or a dummy metal layer pattern (e.g., dummy interconnects) not being electrically and functionally connected to any other (functional) circuit cell. A non-functional cell may also be an interconnect cell, comprising a metal layer pattern configured to interconnect neighboring circuit cells. An interconnect cell may for instance comprise one or more (horizontal) metal lines, one or more metal contacts, and/or one or more metal vias. A filler cell configured as an interconnect cell may in particular be used to interconnect two non-filler cells across the in-die stitching region, typically via metal layer patterns of one or more metal levels above the metal layer pattern of the interconnect cell.

At least a majority of the circuit cells of the first and second sub-sets will typically be functional cells.

By the term "filler cell" is here meant a circuit cell comprised in the in-die stitching sub-region and being either a functional cell or a non-functional cell. In either case, the filler cells are associated with a critical dimension which is greater than a corresponding critical dimension of the circuit cells of the first and second sub-sets.

For conciseness, the term "non-filler cell" may in the following be used to refer to any circuit cell of the first and second sub-set, as a shorthand for distinguishing from the filler cells of the in-die stitching sub-region.

By the term "in-die stitching sub-region" is here meant a further or "third" sub-region, disposed between the first and second sub-regions, and defined or formed (i.e., spanned) by the one or more rows of filler cells.

By the term "CD" with respect to a filler cell is here meant a CD of a given type of circuit feature of the filler cell.

Accordingly, by the term "corresponding CD" with respect to a non-filler cell is here meant a CD of a corresponding type of circuit feature of the non-filler cells.

In some embodiments, each circuit cell comprises one or more feature patterns, wherein each feature pattern is any one of a semiconductor pattern, a gate pattern, or a metal layer pattern.

In some embodiments, each feature pattern is associated with (i.e., has) a respective CD,
wherein said CD of the filler cells is the CD associated with any one of the one or more feature patterns of the filler cells, and
wherein said corresponding CD of the circuit cells of the first and second sub-sets is the CD associated with the corresponding feature pattern (i.e., the feature pattern corresponding to the aforementioned feature pattern of the filler cells) of the first and second sub-set of circuit cells.

Accordingly, where the filler cells comprise a semiconductor pattern, a CD of the semiconductor pattern of the filler cells may be greater than a corresponding CD of a respective semiconductor pattern of the non-filler cells.

Correspondingly, where the filler cells comprise a gate pattern, a CD of the gate pattern of the filler cells may be greater than a corresponding CD of a respective gate pattern of the non-filler cells.

Correspondingly, where the filler cells comprise a metal layer pattern, a CD of the metal layer pattern of the filler cells may be greater than a corresponding CD of a respective metal layer pattern of the of the non-filler cells.

In some embodiments, the aforementioned CD of the filler cells is a pitch, a critical width dimension or a spacing of the semiconductor pattern, the gate pattern, or the metal layer pattern of the filler cells.

Accordingly, where the filler cells comprise a semiconductor pattern, a pitch or a line width of the semiconductor pattern (e.g., a fin pitch or a fin width) of the filler cells may be greater than a pitch or a line width of the semiconductor patterns (e.g., fins) of the non-filler cells.

Correspondingly, where the filler cells comprise a gate pattern, a pitch (e.g., a contacted poly pitch (CPP) or gate contact pitch (GCP)) or a gate length (corresponding to a width dimension of the gates) of the gate pattern may be greater than a pitch or gate length of the gate patterns of the non-filler cells.

Correspondingly, where the filler cells comprise a metal layer pattern, a pitch or a width dimension (e.g., a metal line pitch, a metal line width, a metal contact pitch, a metal via pitch or a metal via width dimension) of the metal layer pattern may be greater than a pitch or width length of a corresponding metal layer pattern of the non-filler cells set. By "corresponding metal layer pattern" is here meant the metal layer pattern of the non-filler cells arranged at a same metal level (i.e., interconnect level) as the aforementioned metal layer pattern of the filler cells.

In some embodiments, one or more of the filler cells is configured as a dummy cell being electrically disconnected from the first and second sub-set of circuit cells. As described above, by the filler cells being associated with a CD being greater than a corresponding CD of the non-filler cells, the requirements on precision of the control and alignment of stitching image fields during fabrication may be relaxed. Further, configuring one or more filler cells as a dummy cell ("dummy filler cell") further reduces the sensitivity of the overall circuit to imprecisions as the dummy cells per se is not intended to provide any circuit function. A further benefit of dummy cells is that the functionality of the non-filler cells may be unaffected by the presence of the dummy cells, which may facilitate circuit design, such as floorplanning and routing.

A dummy filler cell may comprise one or more of a dummy semiconductor pattern, a dummy gate pattern and a dummy metal layer pattern. One or more of the following may apply: a CD of the dummy semiconductor pattern may be greater than a corresponding CD of the semiconductor patterns of the non-filler cells; a CD of the dummy gate pattern may be greater than a corresponding CD of the gate patterns of the non-filler cells; a CD of the dummy metal layer pattern may be greater than a corresponding CD of the metal layer patterns of the non-filler cells.

In some embodiments, one of more of the filler cells is configured as a logic cell. A filler cell configured as a logic cell ("logic filler cell") may hence define a relaxed CD functional cell, implementing a logic function, and thus contribute to the overall circuit function of the IC device.

A logic filler cell may like a functional non-filler cell comprise comprises a semiconductor pattern, a gate pattern and a metal layer pattern. One or more of the following may apply: a CD of the semiconductor pattern may be greater than a corresponding CD of the semiconductor patterns of the non-filler cells; a CD of the gate pattern may be greater than a corresponding CD of the gate patterns of the non-filler cells; a CD of the metal layer pattern may be greater than a corresponding CD of the metal layer patterns of the non-filler cells.

In some embodiments, each logic cell is connected to a circuit cell of the first and/or second sub-set. The logic filler cell(s) may hence be electrically and functionally integrated with non-filler cells of the first and/or second sub-region. Where a logic filler cell is connected to a non-filler cell of both the first and second sub-regions, the logic filler cell may be used to implemented a combined logic function, across the in-die stitching sub-region. This may be especially useful where the in-die stitching sub-region extends across and through a circuit block (e.g., a macro or IP block), as will be further discussed below.

In some embodiments, one or more of the filler cells comprises a metal layer pattern comprising one or more metal interconnects, such as one or more metal lines, one or more metal contacts and/or one or more metal vias.

The filler cell(s) may hence comprise a pattern of one or more metal interconnects with a relaxed CD relative to corresponding one or more metal interconnects of the non-filler cells.

Such a metal layer pattern may be comprised in a filler cell a functional logic filler cell, or a non-functional filler cell such as a dummy cell or an interconnect cell.

In some embodiments, the aforementioned CD (or set of CDs) of the filler cells is at least two times the corresponding CD (or the corresponding CD of the corresponding set of CDs) of the circuit cells of the first and second sub-sets is the CD. Relaxing the CD(s) of the filler cells by a factor of two, may considerably relax the requirements on precision of the control and alignment of stitching image fields during fabrication.

In some embodiments, the circuit region comprises a set of circuit blocks, wherein each circuit block comprises a respective set of sub-rows of the plurality of rows of circuit cells, and
wherein at least one of the set of circuit blocks extends from the first sub-region to the second sub-region, across the in-die stitching sub-region, and comprises a first set of sub-rows of the first sub-set of rows of circuit cells, a second set of sub-rows of the second sub-set of rows of circuit cells, and a third set of sub-rows of the one or more rows of filler cells, intermediate the first and second sets of sub-rows.

This may facilitate designing the floorplanning of the circuit region, since the circuit blocks may be arranged more freely within the floorplan or circuit region with less regard to a location of an in-die stitching boundary. If at-resolution stitching is to be avoided, precautions would otherwise be needed to distribute the circuit blocks such that no circuit block overlaps the in-die stitching boundary. This may be both complex and time consuming, and sometimes not technically feasible without collateral on the overall circuit function of the IC device.

In some embodiments, each circuit block is any one of a macro, an IP block or a non-IP block. Hence, macros, IP blocks and non-IP blocks may be supplemented with one or more rows of filler cells.

In some embodiments of the second aspect, placing the circuit cells comprises:
placing the circuit cells in a preliminary distribution in the floorplan;
identifying a set of timing critical circuit cells forming part of a timing critical path located on opposite sides of the in-die stitching boundary; and
placing the circuit cells in the plurality of rows in the first and second sub-regions, wherein the first sub-region comprises a first row closest to the stitching sub-region and the second sub-region comprises a second row closest to the stitching sub-region, and wherein the placement prioritizes placing timing critical circuit cells of the set of timing critical circuit cells in the first and second rows over placing non-timing critical circuit cells of the preliminary distribution in the first and second rows.

Circuit cells on a timing critical path extending across the in-die stitching boundary may hence be placed in the rows closest to the in-die stitching sub-region preferentially over non-timing critical circuit cells. This may facilitate maintaining timing performance of the IC device despite the addition of filler cells, by shifting the non-timing critical circuit cells farther from the in-die stitching sub-region.

### BRIEF DESCRIPTION OF THE DRAWINGS

These and other aspects of the present invention will now be described in more detail, with reference to the appended drawings.
Fig. 1 is a schematic representation of a die requiring in-die stitching.
Fig. 2a-b is a schematic view of a floorplan of an IC device.
Fig. 3 is a schematic view of a circuit cell.
Fig. 4a-b shows a schematic side-by-side view of a non-filler cell and a filler cell according to an example (Fig. 4a), and a part of a circuit region comprising such non-filler and filler cells (Fig. 4b).
Fig. 5a-b shows a schematic side-by-side view of a non-filler cell and a filler cell according to a further example (Fig. 5a), and a part of a circuit region comprising such non-filler and filler cells (Fig. 5b).
Fig. 6a-b shows a schematic side-by-side view of a non-filler cell and a filler cell according to a further example (Fig. 6a), and a part of a circuit region comprising such non-filler and filler cells (Fig. 6b).
Fig. 7a-b shows a schematic side-by-side view of a non-filler cell and a filler cell according to a further example (Fig. 7a), and a part of a circuit region comprising such non-filler and filler cells (Fig. 7b).
Fig. 8a-b shows a variation of the floorplan of Fig. 2a-b wherein the circuit region comprises a set of circuit blocks.
Fig. 9 is a flowchart of a method for floorplanning of a circuit region of an IC device.

### DETAILED DESCRIPTION

The drawings are only schematic and the relative dimensions of illustrated elements, such as layers or other structures, may be exaggerated and not drawn to scale. Rather the dimensions may be adapted for illustrational clarity and to facilitate understanding. When present in the figures, the indicated axes X and Y point in a first direction and a second direction relative a die of an IC device. The X and Y directions are transverse to each other. The X and Y directions are both horizontal directions, i.e., parallel to a major plane of a die. The X and Y directions may also be referred to as a row or width direction and a height direction, respectively.

It is further to be noted that terms such as "first" and "second" etc. with reference to elements (e.g. sub-regions, sub-sets, features, floorplans, or other features) or, as the case may be, process steps are used herein only as labels to facilitate distinguishing between different elements, and need not necessarily imply that such elements or process steps are arranged or performed in that particular order, unless stated otherwise.

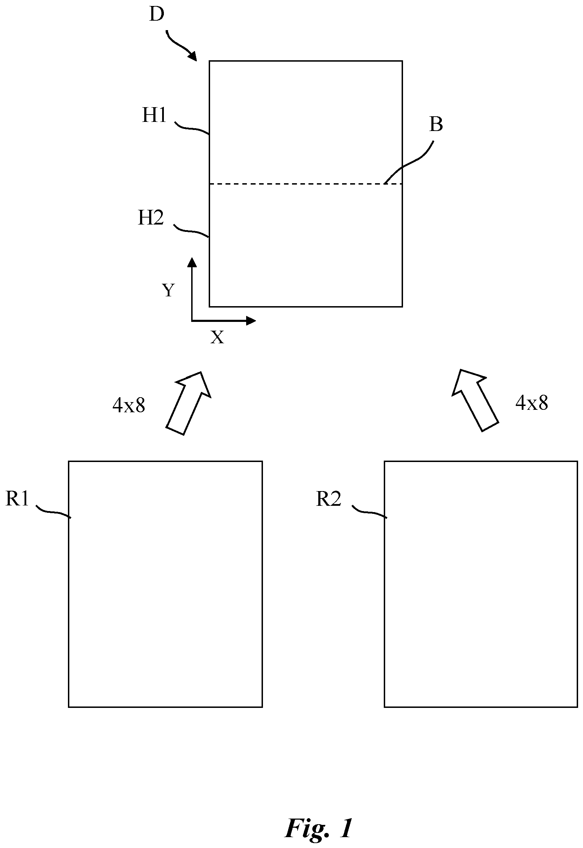

Fig. 1 is a schematic representation of a die D being larger than an image field of a lithographic scanner used for patterning the die, and thus requiring in-die stitching. The die D of the illustrated example is twice the size of the on-wafer image half field, thus requiring stitching of two abutting images H1, H2 from two different reticles R1, R2. The dashed line B indicates the in-die stitching boundary extending across the die D in the X direction. A high-NA EUVL scanner provides a 4x8 demagnification and uses a reticle size of 104 mm x 132 mm. This results in an on-wafer image half field of 26 mm x 16.5 mm. Hence, stitching two images allows exposing a die area of 26 mm x 33 mm.

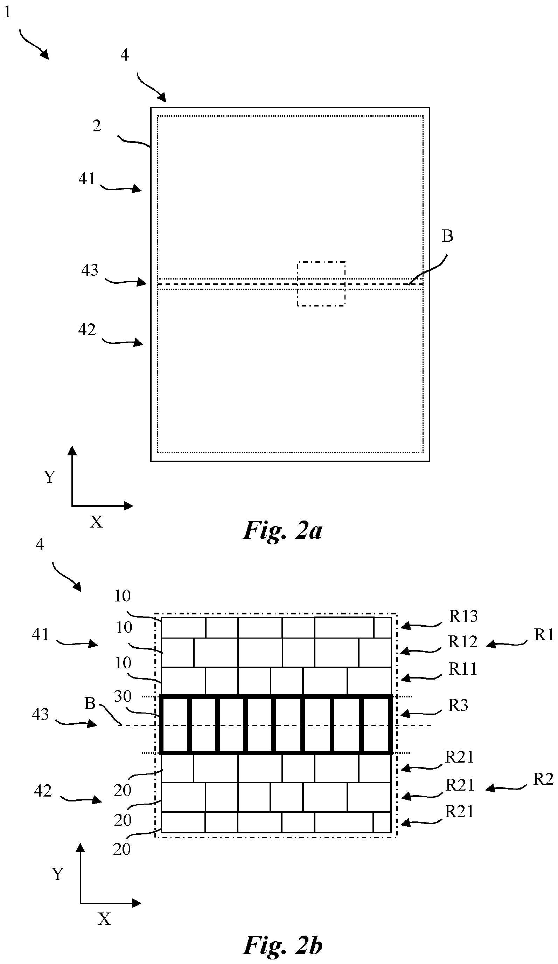

Fig. 2a is a schematic view of a floorplan of a circuit region 4 of a die 2 of an integrated circuit device 1. Fig. 2b shows an enlargement of a representative example portion of the circuit region 4, indicated by the dash-dotted line in Fig. 2a.

The die 2 may be a conventional substrate, suitable for semiconductor device processing. The die 2 may for instance be a Si substrate, a Ge substrate or a SiGe substrate. Other non-limiting examples include a silicon-on-insulator (SOI) substrate, a GeOI substrate or a SiGeOI substrate. A major plane of the die 2, or equivalently a major plane of extension of the die 2, is parallel to the XY plane in Fig. 2.

The circuit region 4 extends along the die 2 in the first and second directions X, Y and comprises a plurality of circuit cells 10, 20, 30. The plurality of circuit cells 10, 20, 30 are arranged in a plurality of rows R1, R2, R3 extending in parallel in the X direction.

The circuit region 4 comprises a first sub-region 41 comprising a first sub-set of the plurality of rows of circuit cells R1 (e.g., comprising rows R11, R12, R13 etc.). That is, the first sub-region 41 comprises circuit cells 10 (non-filler cells) arranged in a first sub-set of rows R1 of the plurality of rows circuit cells of the circuit region 4. The further circuit region 4 comprises a second sub-region 42 comprising a second sub-set of the plurality of rows of circuit cells R2 (e.g., comprising rows R21, R22, R23 etc.). That is, the second sub-region 42 comprises circuit cells 20 (non-filler cells) arranged in a second sub-set of rows R2 of the plurality of rows circuit cells of the circuit region 4.

Fig. 2b only shows a small number of rows R11, R12, R13 and R21, R22, R23 of the first and second sub-sets of rows R1, R2, respectively. As indicated in the figure, the non-filler circuit cells 10, 20 may typically have a uniform cell height (as seen along the Y direction), however the cell widths (as seen along the X direction) may vary within and/or between the respective rows R11, R12, R13 and R21, R22, R23.

The non-filler cells 10, 20 of the first and second sub-regions 41, 42 may typically be functional cells, e.g., configured as a logic cell, a memory cell or an I/O cell, or any other conventional circuit function.

The circuit region 4 further comprises an in-die stitching ("third") sub-region 43 extending across the circuit region 4 in the X direction.

The first and second sub-regions 41, 42 are contiguous to (i.e., abut) and arranged on opposite sides of the in-die stitching sub-region 43.

The in-die stitching sub-region 43 extends along an in-die stitching boundary B which extends in the X direction and, as shown in Fig. 2, may substantially coincide with a midline of the die 2.

Comparing Fig. 2a-b to Fig. 1, it may be appreciated that the portions of the die 2 and circuit region 4 located above and below the stitching boundary B may correspond to the first image H1 (and during device fabrication be exposed using the first reticle R1), and the second image H2 (and during device fabrication be exposed using the second reticle R2).

To avoid at-resolution stitching during device fabrication, the in-die stitching sub-region 43 is formed by a third sub-set of one or more rows of the plurality of rows of circuit cells R3. The circuit cells of the third sub-set R3 are configured as filler cells 30 with a critical dimension (CD) which is greater than a corresponding critical dimension of the circuit cells 10, 20 of the first and second sub-sets R1, R2.

Providing one or more rows of filler cells 30 with a relaxed CD along the stitching boundary B may facilitate in-die stitching with little or negligible loss of area efficiency.

Assuming as an illustrative and non-limiting example a circuit cell height of 90 nm (corresponding to the cell height in the 14A logic technology node), and a full die height of 33 mm (where the "die height" corresponds to the die dimension along the second direction), the area loss amounts to approximately 0.00027 % per row of filler cells.

In the illustrated example, the in-die stitching sub-region 43 is formed by a single row of filler cells R3. While this provides the smallest area loss, it is also possible to configure an in-die stitching sub-region 43 with a greater number of rows of filler cells. For example, the in-die stitching sub-region may be formed by (or consist of) any number of rows of filler cells 30 in a range from 1 to 10 rows.

The in-die stitching sub-region 43 may comprise functional filler cells, non-functional filler cells, and combinations thereof. Various example configurations of filler cells 30, functional and non-functional, with different types of relaxed CDs will be discussed in the following. However, in general, and as also may be appreciated from the following discussion, a circuit cell (a non-filler cell 10, 20 or a filler cell 30) may comprise a set of circuit features of respective types, each type associated with a respective CD. Accordingly, a filler cell (e.g., any of the filler cells 30) may be configured to be associated with (i.e., have) a set of CDs (each CD being associated with a respective type of circuit feature of the filler cell), wherein each CD of the set of CDs is greater than a corresponding CD of a corresponding set of CDs of the non-filler cells (i.e., a CD of a corresponding type of circuit feature of the non-filler cells).

It is contemplated that the CD of the filler cells and the corresponding CD of the non-filler cells or, as the case may be, the set of CDs of the filler cells and the corresponding set of CDs of the non-filler cells, may refer to CDs which, if not relaxed for the filler cells, may render at-resolution stitching challenging for any one of the aforementioned reasons. General examples of such CDs include a pitch of circuit features, a critical width dimension of circuit features, and a spacing of circuit features. Further examples will be set out in the following.

The amount by which the CD(s) of the filler cells is/are relaxed relative the corresponding CD(s) of the non-filler cells may vary. For example, relaxing the CD(s) of the filler cells by a factor of two or more, may considerably relax the requirements on precision of the control and alignment of stitching image fields during fabrication. However, a smaller amount of relaxation may in some cases also be sufficient.

The circuit cells may also comprise circuit features of one or more type whose CDs have substantially no impact on stitching precision. Examples of such CDs include e.g., thicknesses or widths of spacers, such as gate spacers and inner spacers. Where filler cells and non-filler cells comprise such features, the associated CD(s) of the filler cells need not be relaxed relative to the corresponding CD(s) of the non-filler cells.

Additionally, as may be appreciated by the skilled person, during circuit fabrication, the highest resolution lithography and patterning is typically applied selectively to a few selected types of circuit features, and at selected levels of the IC device. Examples of types of circuit features and levels where the highest resolution may be applied include: the semiconductor pattern (i.e., of the Active level), the gate pattern (i.e., of the Gate level), the metal layer pattern forming the local interconnects (i.e., of the bottom contact level comprising e.g., source/drain contacts, sometimes referred to as "M0A"), the metal layer pattern forming the vias to the local interconnects and gates of the gate pattern (i.e., of the bottom-most via level, sometimes collectively referred to as "VINT", or separately "VINTA" for the vias contacting the local interconnects and "VINTG" for the vias contacting the gates), and the metal layer pattern forming the horizontal metal lines abutting the bottom-most via level (i.e., of the bottom-most horizontal metal line level, sometimes referred to as "MINT" or "M0").

While it also is possible to apply the highest resolution lithography and patterning for circuit features of higher levels, such as a higher bottom-most via level (e.g., V0, V1, etc.) and/or higher horizontal metal line levels (e.g., M1, M2, etc.), relaxed pitches and feature widths are typically applied at the higher levels where routing congestion typically is lower, and hence relaxed CD vias and metal lines may be accommodated to reduce the overall resistance of the interconnect structure. Such relaxed CD levels / circuit features (e.g., relaxed pitch and/or relaxed width dimension) will hence have substantially no impact on stitching precision. Accordingly, for levels of the IC device comprising only such relaxed CD circuit features, the filler cells need not comprise any corresponding circuit features at the corresponding level to avoid at-resolution stitching. Rather the relaxed CD circuit features of the filler cells need only be provided for the circuit features and at the levels where the non-filler cells of the first and second sub-regions comprise features which, if not relaxed for the filler cells, may render at-resolution stitching challenging.

For brevity, reference will in the following be made to the levels of the IC device using the labels introduced above (i.e., Active level, Gate level, M0A, VINT, MINT, etc.) However, it is noted that the specific labels are not to be construed as limiting the applicability to implementations wherein such specific labels are used for the levels of the device. Rather, in the following, "Active" may refer to the level comprising the semiconductor pattern (in particular the active patterns or regions), "Gate" may refer to the level comprising the gate patterns, "M0A" may refer to the level comprising the local interconnects, "VINT" may refer to the level comprising the first/bottom-most vias, "MINT" may refer to the level comprising the first/bottom-most horizontal metal lines, "V0" may refer to the level comprising second metal vias consecutive to the MINT level, and "M1" may refer to the level comprising second horizontal metal lines consecutive to the V0 layer, etc.

For simplicity, it will in the following be assumed that at most, circuit features from the active level and up to and including the MINT level form part of the circuit cells (e.g., the non-filler cells 10, 20 and the filler cells 30). Circuit features (typically vias and horizontal metal lines) of higher levels (e.g., V0 and M1 and higher) will be assumed to be arranged above the circuit cells and not comprised therein. Hence, connections between non-filler cells (e.g., the non-filler cells 10, 20) of the first and second sub-regions may be made using routing resources arranged above the circuit cells. For instance, horizontal metal lines of the M1 level or higher may extend across the in-die stitching region 43, over and by-passing the filler cells 30, and be connected to the respective non-filler cells 10, 20 by vias of the V0 level.

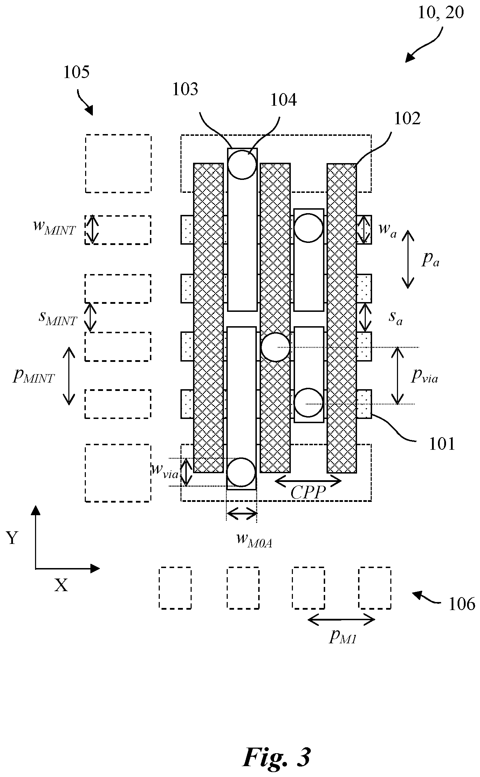

Fig. 3 is a schematic view of a layout of an example of a non-filler cell, which is representative for both circuit cells 10 of the first sub-region 41 and circuit cells 20 of the second sub-region 42. It is to be noted that the specific layout shown is merely a non-limiting example used to introduce the various circuit feature patterns which may be comprised in a circuit cell and that the circuit cells 10, 20 hence not are limited to this specific layout or implementation.

The illustrated circuit cell 10, 20 comprises circuit features arranged in a set of feature patterns: a semiconductor pattern 101, a gate pattern 102 (or "poly"), and a number of metal layer patterns 103, 104, 105.

The semiconductor pattern 101 is formed by a number of elongated features (e.g., fin-shaped) of semiconductor material, extending in parallel in the X direction. The semiconductor pattern 101 is comprised in the Active level. Each elongated feature of the semiconductor pattern 101 defines a respective active region comprising a number of source/drain regions (adjacent the gates of the gate pattern 102) and channel regions (overlapped by the gates of the gate pattern 102). The S/D regions may comprise semiconductor material bodies, e.g., epitaxially grown, doped with an n- or p-type dopant. The channel regions may comprise a channel structure of a semiconductor channel material, extending between and connecting the semiconductor material bodies of the surrounding S/D regions. The channel structure may be fin-shaped (e.g., to form a finFET transistor) or comprise a vertical stack of channel layers in the form of nanowires or nanosheets (e.g., to form a gate-all-around transistor).

Fig. 3 indicates examples of feature dimensions of the semiconductor pattern 101 which may be critical dimensions for the purpose of in-die stitching: a pitch (e.g., active pitch or fin pitch) *pₐ,* a line width (e.g., active width or fin width) *wₐ*, and a spacing (e.g., active spacing or fin spacing) *sₐ.* Each of these types of CDs are measured along the Y direction.

The gate pattern 102 comprises a set of gates or gate structures extending in parallel in the Y direction and overlapping the channel regions of the active regions formed by the semiconductor pattern 101. The gate pattern 102 is comprised in the Gate level. Fig. 3 shows the gates 102 in a schematic and simplified manner as a single layer, but the gates (i.e., the conductive gate body / gate electrode of each gate structure) may typically comprise one or more gate metal layers (e.g., work function metal(s) and gate fill metal) and further be provided with a gate spacer along sidewalls. The gate pattern 102 may additionally comprise one or more dummy gates, i.e., gates which are electrically disconnected from the overall circuit.

Fig. 3 indicates an example of a feature dimension of the gate pattern 102 which may be critical dimensions for the purpose of in-die stitching, namely the CPP. For sake of completeness, other feature dimensions of the gate pattern 102 which may be relevant but not are specifically indicated include gate length (i.e., the line width of the gates) and the gate spacing. Each of these types of CDs are as measured along the X direction.

The circuit cell 10, 20 comprises a pattern of metal contacts forming local interconnects 103 of the circuit cell 10, 20. The local interconnects 103 are comprised in the M0A level. The local interconnects 103 may comprise one or more metal layers, for example (at least) two metal layers: a bottom layer ("contact-to-active" or "trench silicide") and a top or "plug" layer (e.g. of TiN, Co, Ru and/or W).

The circuit cell 10, 20 comprises a pattern of vias 104 contacting the local interconnects 103 and the gate pattern 102. The via pattern 104 is comprised in the VINT level.

The circuit cell 10, 20 comprises a pattern of horizontal metal lines 105, schematically indicated at the left side of the circuit cell 10, 20 by a set of routing tracks extending in parallel in the X direction. The metal lines / routing tracks 105 are comprised in the MINT level. The number of routing tracks determine the track height of the circuit cell 10, 20. Of course, the track height will vary depending on the implementation of the circuit cell 10, 20 and the track height of the illustrated circuit cell 10, 20 is merely an example.

Fig. 3 indicates examples of feature dimensions of the each of the metal layer patterns 103, 104, 105 which may be critical dimensions for the purpose of in-die stitching. A CD for the local interconnects 103 include a line width *w_{M0A}* (along the X direction). A CD for the via pattern 104 includes a via width dimension *wᵥᵢₐ* (along the Y), and a via pitch *pᵥᵢₐ* (along the Y). A CD for the MINT level metal lines / routing tracks 105 include a track / metal line pitch *p_{MINT},* a track / line width *w_{MINT},* and a track / line spacing *s_{MINT}.* Each of these types of CDs are measured along the Y direction.

For sake of completeness, other feature dimensions of the local interconnects 103 which may be relevant but not are specifically indicated include pitch along the X direction (which is equivalent to the CPP) and contact spacing along the Y direction (whose specific CD will be dependent on the pitch *p_{MINT}* of the MINT level).

The edge tracks of the circuit cell 10, 20 may as shown, and as per se is known, be of a double line width (along the Y direction) relative to the non-edge tracks, and further be shared with neighboring circuit cells across the horizontal cell boundaries. The edge tracks may typically, but not necessarily, be used to accommodate power rails (e.g., VDD and VSS).

In the lower portion of Fig. 3 there is further schematically indicated routing tracks 106 of the M0 level, along which higher level horizontal metal lines extending over the circuit cell 10, 20 may be disposed, typically along the Y direction.

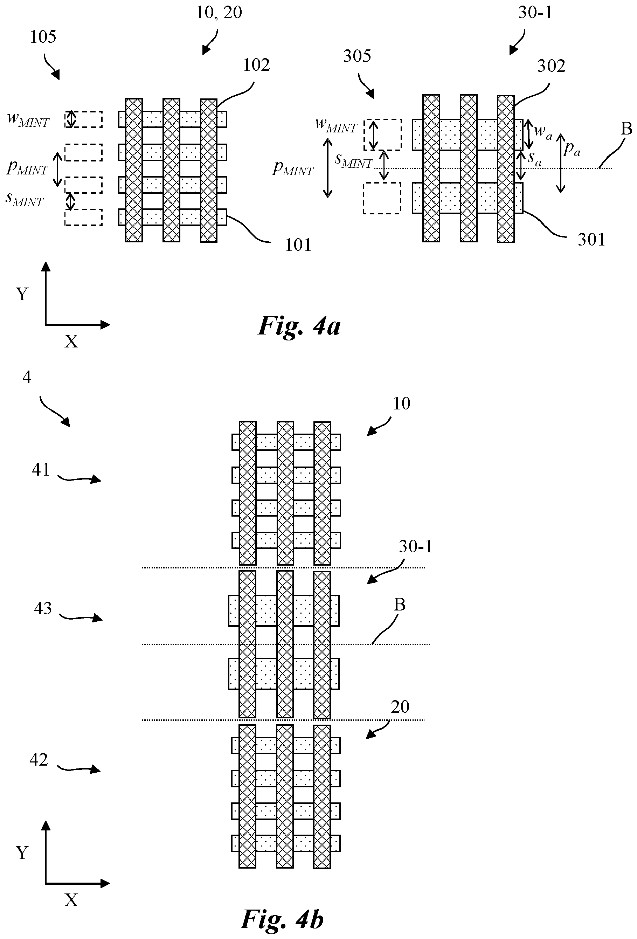

Fig. 4a shows a schematic side-by-side view of a non-filler cell 10, 20 of the first or second sub-region 41, 42 shown in Fig. 2a-b, and an example of a filler cell 30-1. Fig. 4b shows the circuit cells 10, 20, 30-1 in context of the respective sub-regions 41, 42, 43 of the circuit region 4 of Fig. 2a-b.

The non-filler cell 10, 20 corresponds to the non-filler cell 10, 20 of Fig. 3. However, for illustrational clarity, some of the feature patterns have been omitted from Fig. 4a-b such that only the semiconductor pattern 101, the gate pattern 102 and the (MINT level) metal lines 105 of the non-filler cell 10, 20 are shown. The filler cell 30-1 is depicted with corresponding feature patterns, i.e., a semiconductor pattern 301, a gate pattern 302, and (MINT level) metal lines 305. It is however to be understood that the filler cell 30-1 may, like the non-filler cell 10, 20, comprise additional feature patterns corresponding to those discussed in relation to Fig. 4a-b.

The filler cell 30-1 is an example of a filler cell with a relaxed CD in the form of a relaxed metal line pitch relative a corresponding metal line pitch of the non-filler cell 10, 20. Thus, as shown in Fig. 4a, the pitch *p_{MINT}* of the metal lines 305 is greater than the corresponding pitch *p_{MINT}* of the metal lines pattern 105 (which in the illustrated example is the feature pattern of the non-filler cell 10, 20 corresponding to the metal lines 305).

As shown in Fig. 4a, a relaxed pitch *p_{MINT}* of the metal lines 305 may imply an analogous relationship to CDs in the form of a line width *w_{MINT}* and a spacing *s_{MINT}* of the metal lines 305, each of which may be greater than the corresponding line width *w_{MINT}* and a spacing *s_{MINT}* of the metal lines 105.

As further shown in Fig. 4a, the filler cell 30-1 may additionally have a relaxed CD in the form of a relaxed semiconductor pattern pitch relative a corresponding semiconductor pattern pitch of the non-filler cell 10, 20. Thus, as shown in Fig. 4a, the pitch *pₐ* of the semiconductor pattern 301 is greater than the corresponding pitch *pₐ* of the semiconductor pattern 101 (which in the illustrated example is the feature pattern of the non-filler cell 10, 20 corresponding to the semiconductor pattern 301).

As further shown in Fig. 4a, a relaxed pitch *pₐ* of the semiconductor pattern 301 may imply an analogous relationship to CDs in the form of a line width *wₐ* and a spacing *sₐ* of the semiconductor pattern 301, each of which may be greater than the corresponding line width *wₐ* and a spacing *sₐ* of the semiconductor pattern 101 (which in the illustrated example is feature pattern of the non-filler cell 10, 20 corresponding to the semiconductor pattern 301).

In the illustrated example, the respective relaxed CDs (*p_{MINT}, w_{MINT}, s_{MINT},* etc.) of the filler cell 30 are approximately two times the respective corresponding CDs of the non-filler cell 10, 20. However, a smaller or greater difference is also possible.

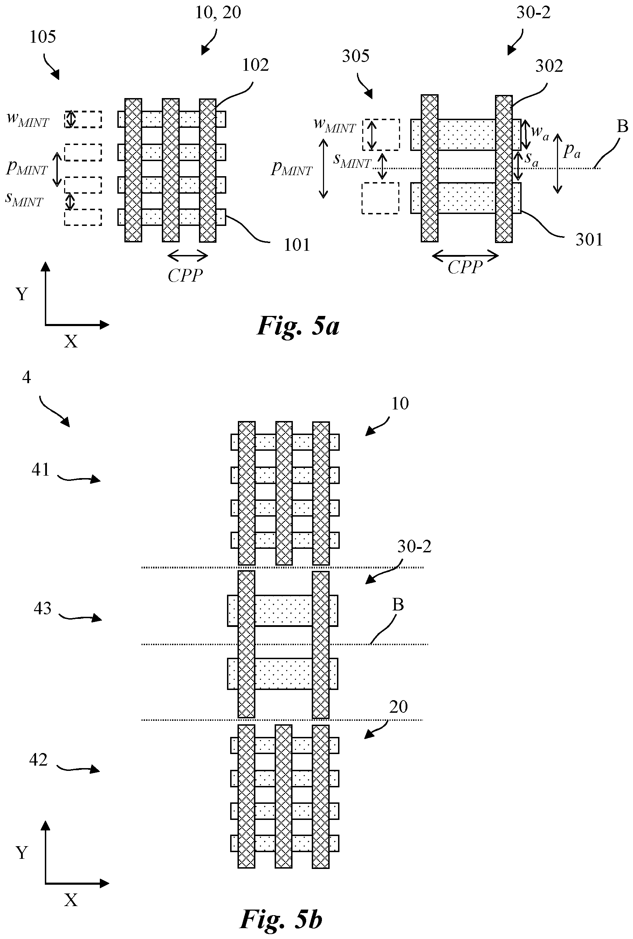

Fig. 5a shows a schematic side-by-side view of a non-filler cell 10, 20 of the first or second sub-region 41, 42 shown in Fig. 2a-b, and a further example of a filler cell 30-2. Fig. 5b shows the circuit cells 10, 20, 30-2 in context of the respective sub-regions 41, 42, 43 of the circuit region 4 of Fig. 2a-b.

Fig. 5a-b omits for illustrational clarity the same feature patterns from the non-filler and filler cells 10, 20, 30-2 as Fig. 4a-b. The discussion of the non-filler cell 10, 20 with reference to Fig. 4a applies correspondingly to the non-filler cell 10, 20 of Fig. 5a.

The filler cell 30-2 is an example of a filler cell with a relaxed CD in the form of a relaxed gate pitch relative a corresponding gate pitch of the non-filler cell 10, 20. Thus, as shown in Fig. 5a, the pitch *CPP* of the gate pattern 302 is greater than the corresponding pitch *CPP* of the gate pattern 102 (which in the illustrated example is the feature pattern of the non-filler cell 10, 20 corresponding to the gate pattern 302).

While not expressly indicated with measures in Fig. 5a, a relaxed pitch *CPP* of the gate pattern may imply an analogous relationship to CDs in the form of a gate length and a gate spacing of the gate pattern 302, each of which may be greater than the corresponding gate length and gate spacing of the gate pattern 102.

As shown in Fig. 5a, the relaxed gate pitch *CPP* may be combined with a relaxed pitch *p_{MINT}* of the metal lines 305 and a relaxed pitch *pₐ* of the semiconductor pattern 301.

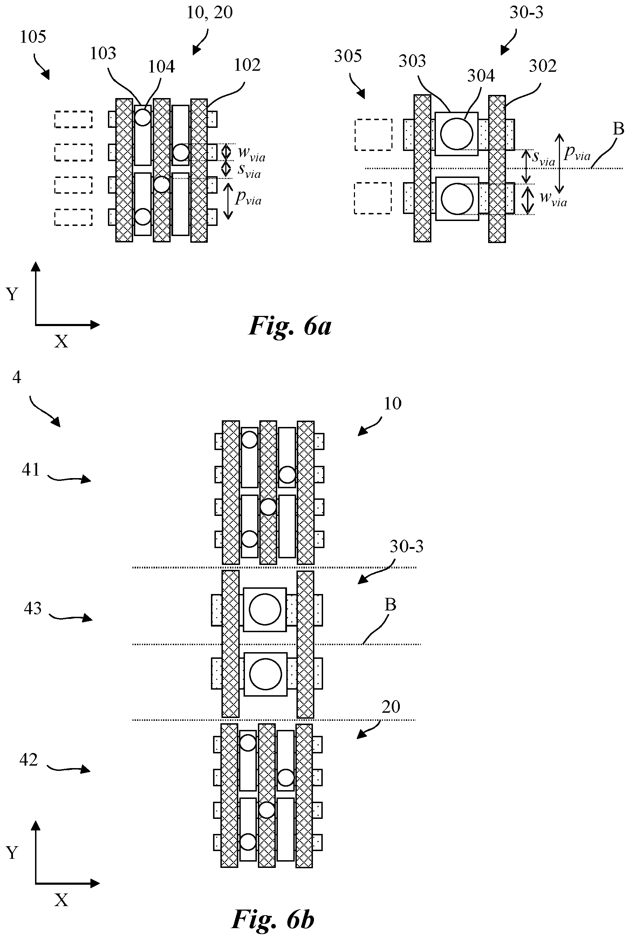

Fig. 6a shows a schematic side-by-side view of a non-filler cell 10, 20 of the first or second sub-region 41, 42 shown in Fig. 2a-b, and a further example of a filler cell 30-3. Fig. 6b shows the circuit cells 10, 20, 30-3 in context of the respective sub-regions 41, 42, 43 of the circuit region 4 of Fig. 2a-b.

Fig. 6a-b shows in addition to the feature patterns shown in Fig. 4a-b and 5a-b the further metal layer patterns 303 and 304.

The metal layer pattern 303 corresponds to the metal layer pattern 103 and accordingly comprises a pattern of metal contacts forming local interconnects 303 of the filler cell 30. The local interconnects 303 may like the local interconnects 103 be comprised in the M0A level.

The metal layer pattern 304 corresponds to the metal layer pattern 104 and accordingly comprises a pattern of vias 304 contacting the local interconnects 303. While not shown in Fig. 6a-b, the via pattern 304 may additional comprise vias contacting the gate pattern 302. The via pattern 304 may like the via pattern 104 be comprised in the VINT level.

The filler cell 30-3 is an example of a filler cell with a relaxed CD in the form of a relaxed via pitch relative a corresponding via pitch of the non-filler cell 10, 20. Thus, as shown in Fig. 6a, the pitch *pᵥᵢₐ* of the via pattern 304 is greater than the corresponding pitch *pᵥᵢₐ* of the via pattern 104 (which in the illustrated example is the feature pattern of the non-filler cell 10, 20 corresponding to the via pattern 304).

As further shown, the filler cell 30-3 may additionally have a relaxed CD in the form of a relaxed width dimension *wᵥᵢₐ* and/or in the form of a relaxed spacing *sᵥᵢₐ* of the via pattern 304 relative the via pattern 104 of the non-filler cell 10, 20. Thus, as shown in Fig. 4a, the width dimension *wᵥᵢₐ* of the via pattern 304 is greater than the corresponding width dimension *wᵥᵢₐ* of the via pattern 104

As further indicated , the filler cell 30-3 may additionally have a relaxed CD in the form of a relaxed width dimension *wᵥᵢₐ* and/or in the form of a relaxed spacing *sᵥᵢₐ* of the via pattern 304 relative the via pattern 104 of the non-filler cell 10, 20. Thus, as shown in Fig. 4a, the width dimension *wᵥᵢₐ* of the via pattern 304 is greater than the corresponding width dimension *wᵥᵢₐ* of the via pattern 104 (which in the illustrated example is the feature pattern of the non-filler cell 10, 20 corresponding to the semiconductor pattern 301).

While not expressly indicated with measures in Fig. 6a, a relaxed pitch *pᵥᵢₐ* of the via pattern 304 may be combined with an analogous relationship to CDs in the form of a pitch of the local interconnects 303 along the Y direction. Further, a relaxed pitch *pᵥᵢₐ* of the via pattern 304 and/or relaxed pitch of the local interconnects 303 may be combined with a relaxed pitch of the metal lines 305, the semiconductor pattern 301 (as shown in Fig. 4a) and/or the gate pattern 302 (as shown in Fig. 5a).

The examples of filler cells 30-1, 30-2, 30-3 discussed above are each filler cells of a type which may be configured as a non-functional dummy cell. A filler cell 30-1, 30-2, 30-3 configured as a dummy cell may be electrically disconnected from the non-filler cells 10, 20.

Where a filler cell 30-1, 30-2, 30-3 is configured as a dummy cell, the feature patterns may be referred to as a dummy semiconductor pattern 301, a dummy gate pattern 302 and a dummy metal layer pattern (e.g., dummy local interconnects 303, dummy vias 304, dummy metal lines 305).

A further example configuration of a "non-functional" filler cell 30-1, 30-2, 30-3 is to configure one or more of the metal layer patterns, such as the (MINT level) metal lines 305 as a routing resource for providing an interconnection between non-filler cells 10, 20 of the first and second sub-regions 41, 42, across the in-die stitching sub-region 43. For example, a metal line of the M0 level may extend from the first sub-region 41 into the in-die stitching sub-region 43 to overlap a first metal line 305 of a filler cell 30-1, 30-2, 30-3 and be connected thereto by a first V0 level via. Correspondingly, a metal line of the M0 level may extend from the second sub-region 42 into the in-die stitching sub-region 43 to overlap a second metal line 305 of a filler cell 30-1, 30-2, 30-3 and be connected thereto by a second V0 level via. Such a filler cell may be referred to as an interconnect cell. The metal layer patterns of the interconnect cell may thus be used as pins for connecting circuit cells across the in-die stitching sub-region 43. An interconnect cell may hence facilitate providing a signal routing function between the first and second sub-regions 41, 42, but otherwise be considered "non-functional" in the sense that it does not implement any logic function, memory function, I/O function or the like.

It is also possible to configure filler cells 30 as functional cells, thus providing a logic function, memory function, I/O function or the like.

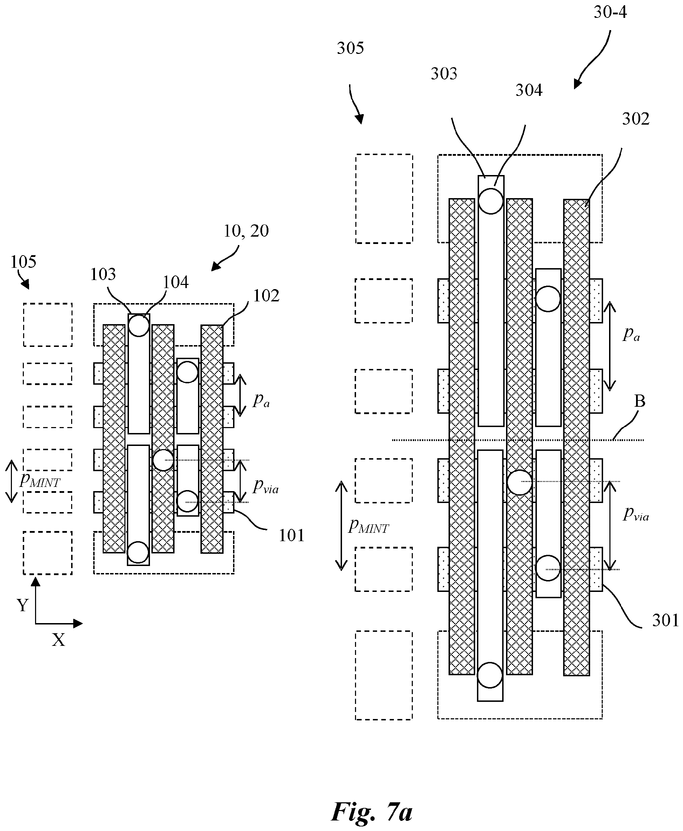

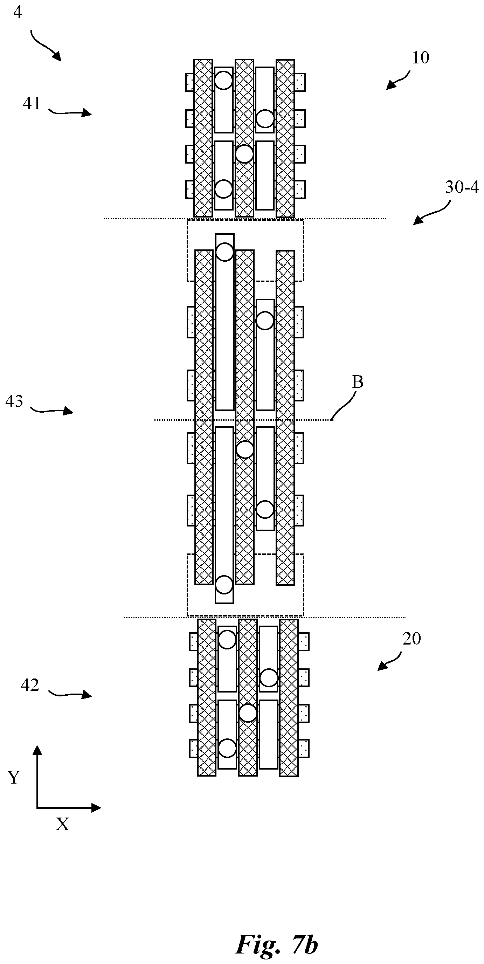

Fig. 7a shows a schematic side-by-side view of a non-filler cell 10, 20 of the first or second sub-region 41, 42 shown in Fig. 2a-b, and a further example of a filler cell 30-4 configured as a logic cell. Fig. 7b shows the circuit cells 10, 20, 30-3 in context of the respective sub-regions 41, 42, 43 of the circuit region 4 of Fig. 2a-b.

The depicted filler cell 30-4 is configured to implement an inverter. This is however merely one example and a filler cell may of course be configured to implement any conventional type of logic function, memory function, I/O function or the like, such as those typically found in a standard cell library.

The filler cell 30-4 comprises feature patterns corresponding to those described above with reference to the filler cells 30-1, 30-2 and 30-3. The filler cell 30-4 is accordingly associated with a set of different CDs, each of which are relaxed relative to a corresponding set of CDs of the non-filler cell 10, 20, such as those indicated in Fig. 7a, a relaxed pitch *pₐ* of the semiconductor pattern 301, a relaxed pitch *p_{MINT}* of the metal lines 305 and a relaxed pitch *pᵥᵢₐ* of the via pattern 304.

The filler cell 30-4 may be connected to a non-filler cell 10, 20 of the first and/or second sub-region 41, 42, e.g., via higher level routing resources above the filler cells 30, e.g., of the V0 and M1 levels and above.

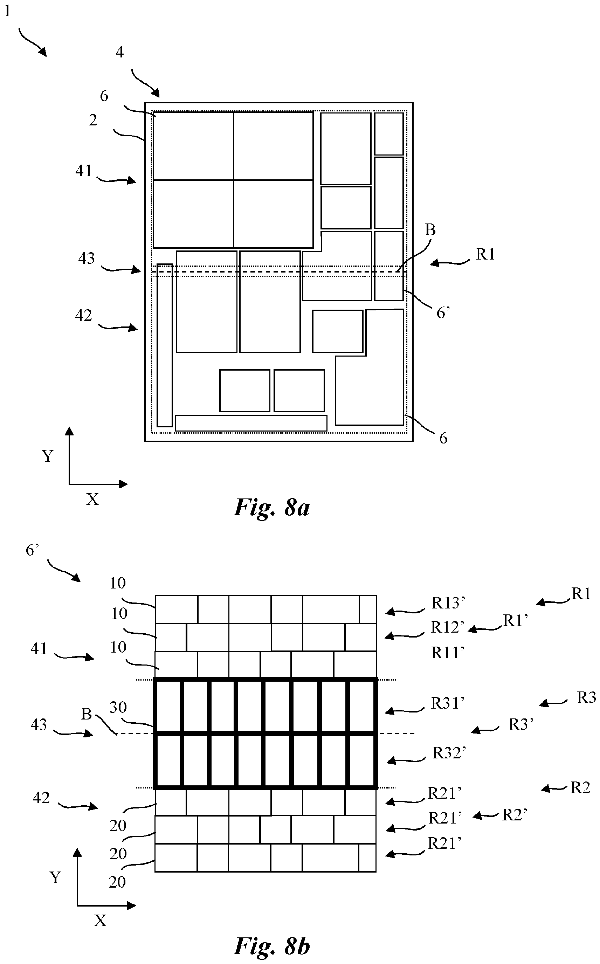

Fig. 8a-b shows a variation of the floorplan of Fig. 2a-b comprising a circuit region 4 generally corresponding to the circuit region of Fig. 2a-b, however differing in that the circuit region 4 comprises a set of circuit blocks 6, schematically indicated by solid line outlines. Additionally, the in-die stitching sub-region 43 is, by way of example, formed of two rows R3 of filler cells 30.

The set of circuit blocks 6 are distributed within the circuit region 4, including the first and second sub-regions 41, 42, in a non-overlapping manner. Accordingly, each circuit block 6 comprises a respective set of sub-rows (i.e., partial rows) of the plurality of rows of circuit cells R1, R2.

Each circuit block 6 may be any one of a macro, an IP block or a non-IP block. Non-limiting examples of circuit blocks include a processing core, a memory (volatile or nonvolatile), a digital logic block, I/O functions, DACs, wireless and/or wired communication interfaces, etc. A macro may as per se is known in the art be a circuit portion formed of a plurality of interconnected circuit cells and configured to provide a higher level circuit function than the individual circuit cells. A macro may implement logic gates, higher level logic functions, arithmetic units, memory controllers, SRAM memory, communication interfaces, etc. The circuit cells of a macro may for example be standard cells from a standard cell library. An IP (Intellectual Property) block may be a circuit portion with a preconfigured functionality. An IP block may form part of a standardized library of IP blocks. An IP block library may be provided by an IP block designer, such as a semiconductor foundry or a design house. An IP block is typically a relatively self-contained circuit portion such that it may be conveniently reused in different implementations of IC devices with little to no adaption. A non-IP block may like an IP block define a self-contained and reusable circuit portion with a preconfigured functionality, however with the difference that it is not comprised in an IP block library. Rather a non-IP block may be developed by a designer of the IC device.

The circuit blocks 6 may be surrounded by additional circuit cells, for example standard cells, implementing other circuit functions supplementing and supporting the functionality of the circuit blocks 6.

A number of the circuit blocks 6, such as the circuit block 6', may as shown extend from the first sub-region 41 to the second sub-region 42, across the in-die stitching sub-region 43. The circuit block 6' accordingly comprises a first set of sub-rows R1' of the first sub-set of rows R1 (e.g., comprising sub-rows R11', R12', R13'), a second set of sub-rows R2' of the second sub-set of rows R2 (e.g., comprising sub-rows R21', R22', R23'), and a third set of sub-rows R3' of the rows of filler cells R3 (e.g., the sub-rows R31', R32'), intermediate the first and second sets of sub-rows R1', R2'. The circuit block 6' thus extends across the in-die stitching sub-region 43 such that the circuit cells of the circuit block 6' is distributed between the first sub-region 41, the second sub-region 42 and the in-die stitching sub-region 43.

As the in-die stitching sub-region 43 is formed by relaxed CD filler cells 30, in-die stitching may hence be provided through circuit blocks such as IP blocks, non-IP blocks and macros, while avoiding at-resolution stitching.

The filler cells 30 comprised in the circuit block 6' may depending on the functionality and implementation of adjacent non-filler blocks 10, 20 be configured as a dummy cell, an interconnect cell, or a logic cell.

While the in-die stitching sub-region 43 in the illustrated example is formed of two rows R31', R32' of filler cells 30, this is merely an example and the number of rows may vary between different implementations.

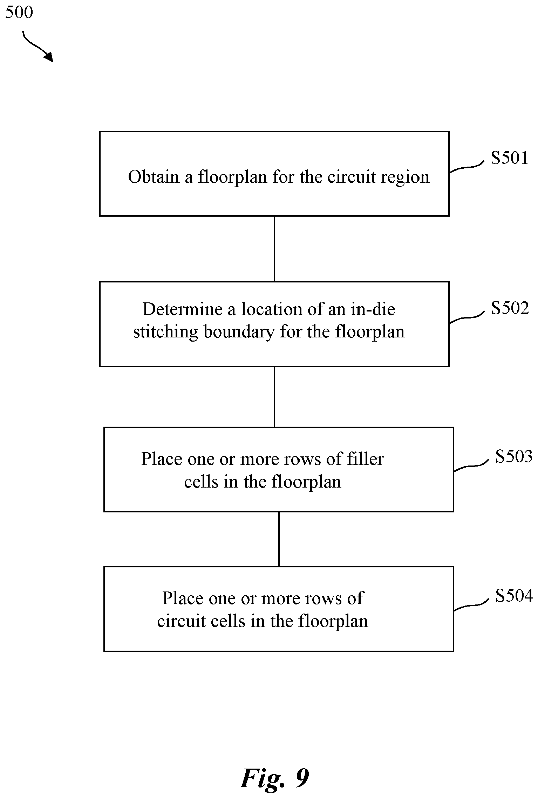

Fig. 9 is a flowchart of a method 500 for floorplanning of a circuit region of an IC device, such as the circuit region 4 of the IC device 1 as shown in Fig. 2a-b or 8a-b.

The method 500 may for example be implemented in an Electronic Design Automation (EDA) tool.

At S501, a floorplan for the circuit region 4 is obtained. The floorplan may be referred to as an initial floorplan. The initial floorplan may at this stage be empty (i.e., absent from circuit cells).

At S502, a location of the in-die stitching boundary B for the floorplan is determined. The location of the stitching boundary B may be determined based on the known dimensions of the die 2, and on a priori knowledge of the on-wafer images sizes the scanner may provide at the highest resolution. Typically, assuming a high-NA scanner, the stitching boundary may be determined as the midline of the die 2 and circuit region 4.

At S503, one or more rows of filler cells 30 are placed in an in-die stitching sub-region 43 of the floorplan, along the in-die stitching boundary B. The number of rows of filler cells 30 may be determined based on various parameters, such as the amount of space which may allocated to filler cells 30 while maintaining the intended functionality of the final IC device, the amount by which the pitches of the filler cells 30 are relaxed, the specific configuration of the circuit cells 10, 20 placed / to be placed along the in-die stitching sub-region 43, etc.

At S504, circuit cells 10, 20 are placed in a plurality of rows in each of a first and a second sub-region 41, 42 of the floorplan, on opposite sides of the in-die stitching sub-region 43.

The placement of filler cells 30 at S503 and circuit cells 10, 20 at S504 may each be performed automatically by the EDA tool, either fully or partly. A partly automatic placement may for instance be based on a preliminary placement of the circuit cells 10, 20, and optionally circuit blocks 6, input by a user of the EDA tool. A fully manual placement of the filler cells 30 at S503 and/or the circuit cells 10, 20 by a user of the EDA tool is also possible.

While placing the filler cells 30 (at S503) prior to placing the circuit cells 10, 20 (at S504) may facilitate floorplanning (e.g., since information about the locations of the filler cells 30 then may be used to guide the placement of the circuit cells 10, 20), it is also possible to place the circuit cells 10, 20 prior to placing the filler cells 30 in the floorplan.

For example, after determining the location of the in-die stitching boundary B, the extent of the in-die stitching sub-region 43 may be determined. Step S504 may then be performed to place the circuit cells 10, 20 in the first and second sub-regions 41, 42. Step S503 may then be performed to place the filler cells 30 in the in-die stitching sub-region 43.

As a further example, the floorplan may either prior to or after determining the location of the in-die stitching boundary B, be provided with a preliminary distribution of circuit cells 10, 20 and circuit blocks 6. The preliminary distribution of circuit cells 10, 20 and circuit blocks 6 may be automatically generated (fully or partly) by the EDA tool, or manually by a user interacting with the EDA tool. The preliminary distribution of circuit cells 10, 20 may, or may not, at this stage take into account the in-die stitching boundary B and in-die stitching sub-region 43. Accordingly, the preliminary distribution of circuit cells 10, 20 may comprise circuit cells 10, 20 placed within the in-die stitching sub-region. The method may thereafter proceed by (at S503) placing one or more rows of filler cells 30 in the in-die stitching sub-region 43. In case circuit cells 10, 20 of the preliminary distribution of circuit cells 10, 20 are comprised in the in-die stitching sub-region 43, the method may prior to placing the filler cells 30 update the placement of the circuit cells 10, 20 such that the in-die stitching sub-region 43 is absent of any circuit cells 10, 20. This updating of the placement may either correspond to step S504, or be an intermediate placement step merely intended to clear the in-die stitching sub-region 43 from any circuit cells 10, 20. In the latter case, the intermediate placement of the circuit cells may after performing step S503, be followed by step S504, to determine a revised placement of the circuit cells 10, 20 in the first and second sub-regions 41, 42.

The floorplan obtained after placement of the circuit cells 10, 20 and filler cells 30 in their respective sub-regions 41, 42, 43 may further proceed to subsequent steps conventional in floorplanning, such as congestion analysis, clock tree generation, etc.

Optionally, the placement of the circuit cells 10, 20 at step S504 may take into account whether any of the circuit cells 10, 20 are arranged on a timing critical path extending across the in-die stitching boundary B and hence defining timing critical circuit cells.

Thus, a first sub-step of step S504 may comprise placing the circuit cells 10, 20 in a preliminary distribution in the floorplan (e.g., automatically, fully or partly, or manually).

A second sub-step of S504 may comprise identifying (i.e., determining) a set of timing critical circuit cells in the preliminary distribution forming part of a timing critical path located on opposite sides of the in-die stitching boundary B. The set of timing critical circuit cells, and the timing critical path, may for example be comprised in a circuit block, such as circuit block 6' of Fig. 8a-b, which in the preliminary distribution extends across the in-die stitching boundary B.

A third sub-step of S504 may comprise placing the circuit cells in the plurality of rows in the first and second sub-regions while prioritizing the placement of the identified timing critical cells in a first row of the first sub-region 41 closest to the in-die stitching sub-region 43, and in a second row of the second sub-region 42 closest to the in-die stitching sub-region 43. That is, during the fourth sub-step, the circuit cells 10, 20 may be placed in the plurality of rows in the first and second sub-regions while prioritizing placing the timing critical circuit cells in the first and second rows, over placing non-timing critical circuit cells of the preliminary distribution in the first and second rows.

The second and third sub-steps of S504 may form part of a legalization process of the floorplan. Thus, the placement of the circuit cells 10, 20 obtained at the third sub-step may correspond to a legalized placement of the circuit cells 10, 20.

Giving the timing critical circuit cells prioritized placement in the rows of the first and second sub-regions closest to (i.e., neighboring to) the in-die stitching sub-region 43 may facilitate maintaining timing performance along the timing critical path despite addition of the filler cells 30. The non-critical timing cells may meanwhile be shifted farther from the in-die stitching sub-region without negative impact on the timing performance.

The person skilled in the art realizes that the present invention by no means is limited to the examples described above. On the contrary, many modifications and variations are possible within the scope of the appended claims. For example,

As may be appreciated from the above discussion, the above discussed aspects, embodiments and examples of an IC device and a method for floorplanning may be especially useful for technology nodes requiring high-NA scanners, such as 0.55 NA EUVL scanners, where at-resolution in-die stitching would be especially challenging. However, it is contemplated that the above disclosure may present a more general applicability to any IC device implementation, and floorplanning method, where in-die stitching without at-resolution is desirable during fabrication. In such a case, the in-die stitching boundary B need not necessarily extend along a midline of the die 2, nor do the first and second sub-regions 41, 42 necessarily need to have substantially uniform footprints.

## Claims

1. An integrated circuit, IC, device (1) comprising:
a die (2);
a circuit region (4) extending along the die (2) in first and second transverse directions (X, Y) and comprising a plurality of circuit cells (10, 20, 30) arranged in a plurality of rows (R1, R2, R3) extending in parallel in the first direction;
wherein the circuit region (4) comprises a first sub-region (41) comprising a first sub-set of the plurality of rows of circuit cells (R1), a second sub-region (42) comprising a second sub-set of the plurality of rows of circuit cells (R2), and an in-die stitching sub-region (43) extending across the circuit region (4) in the first direction,
wherein the first and second sub-regions (41, 42) are arranged on opposite sides of the in-die stitching sub-region (43), and
wherein the in-die stitching sub-region (43) is formed by a third sub-set of one or more rows of the plurality of rows of circuit cells (R3), wherein the circuit cells (30) of the third sub-set (R3) are configured as filler cells with a critical dimension which is greater than a corresponding critical dimension of the circuit cells (10, 20) of the first and second sub-sets (R1, R2).

2. An IC device according to claim 1, wherein each circuit cell (10, 20, 30) comprises one or more feature patterns, wherein each feature pattern is any one of a semiconductor pattern (101, 301), a gate pattern (102, 302), or a metal layer pattern (105, 305).

3. An IC device according to claim 2,
wherein each feature pattern (101, 301; 102, 302; 105, 305) is associated with a respective critical dimension,
wherein said critical dimension of the filler cells (30) is the critical dimension associated with any one of the one or more feature patterns (301, 302, 305) of the filler cells (30), and
wherein said corresponding critical dimension of the circuit cells (10, 20) of the first and second sub-sets (R1, R2) is the critical dimension associated with the corresponding feature pattern (101, 102, 105) of the first and second sub-set of circuit cells (30).

4. The IC device according to claim 3, wherein said critical dimension of the filler cells (30) is a pitch, a critical width dimension, or a spacing of the semiconductor pattern (301), the gate pattern (302), or the metal layer pattern (305) of the filler cells (30).

5. The IC device according to any one of the preceding claims, wherein one or more of the filler cells (30) is configured as a dummy cell (30-1, 30-2, 30-3) being electrically disconnected from the first and second sub-set of circuit cells (R1, R2).

6. The IC device according to any one of the preceding claims, wherein one of more of the filler cells (30) is configured as a logic cell (30-4)

7. The IC device according to claim 6, wherein each logic cell (30-4) is connected to a circuit cell (10, 20) of the first and/or second sub-set (R1, R2).

8. The IC device according to any one of the preceding claims, wherein one or more of the filler cells (30) comprises a metal layer pattern comprising one or more metal interconnects, such as one or more metal lines (305), one or more metal contacts (304) and/or one or more metal vias (303).

9. The IC device according to claim 8, wherein each metal layer pattern (303, 304, 305) of the one or more filler cells (30) is connected to a metal layer pattern comprised in the first and/or second sub-regions (41, 42).

10. The IC device according to any one of the preceding claims, wherein said critical dimension of the filler cells (30) is at least two times the said corresponding critical dimension of the circuit cells (10, 20) of the first and second sub-sets (R1, R2).

11. The IC device according to any one of the preceding claims, wherein the in-die stitching sub-region (43) is formed by at most 10 rows of circuit cells, at most 5 rows of circuit cells, at most 2 rows of circuit cells, or only 1 row of circuit cells.

12. The IC device according to any one of the preceding claims,
wherein the circuit region (4) comprises a set of circuit blocks (6), wherein each circuit block comprises a respective set of sub-rows of the plurality of rows of circuit cells (R1, R2, R3), and
wherein at least one of the set of circuit blocks (6') extends from the first sub-region (41) to the second sub-region (42), across the in-die stitching sub-region (43), and comprises a first set of sub-rows (R1') of the first sub-set of rows of circuit cells (R1), a second set of sub-rows (R2') of the second sub-set of rows of circuit cells (R2), and a third set of sub-rows (R3') of the one or more rows of filler cells (R3), intermediate the first and second sets of sub-rows (R1', R2').

13. The IC device according to claim 12, wherein each circuit block (6, 6') is any one of a macro, an IP block or a non-IP block.

14. A computer-implemented method for floorplanning of a circuit region of an IC device, comprising:
obtaining (S501) a floorplan for the circuit region;
determining (S502) a location of an in-die stitching boundary for the floorplan, the in-die stitching boundary extending in a first direction across the floorplan;
placing (S503) one or more rows of filler cells in an in-die stitching sub-region of the floorplan, wherein the one or more rows of filler cells extend in the first direction and the in-die stitching sub-region extends along the in-die stitching boundary, and
placing (S504) in each of a first and a second sub-region of the floorplan on opposite sides of the in-die stitching sub-region, circuit cells in a plurality of rows extending in parallel in the first direction,
wherein the filler cells have a critical dimension which is greater than a corresponding critical dimension of the circuit cells of the first and second sub-regions.

15. The method according to claim 14, wherein placing (S504) the circuit cells comprises:
placing the circuit cells in a preliminary distribution in the floorplan;
identifying a set of timing critical circuit cells forming part of a timing critical path located on opposite sides of the in-die stitching boundary; and
placing the circuit cells in the plurality of rows in the first and second sub-regions, wherein the first sub-region comprises a first row closest to the stitching sub-region and the second sub-region comprises a second row closest to the stitching sub-region, and wherein the placement prioritizes placing timing critical circuit cells of the set of timing critical circuit cells in the first and second rows over placing non-timing critical circuit cells of the preliminary distribution in the first and second rows.
